(19) Europäisches Patentamt
European Patent Office
Office européen des brevets

(11) EP 4 722 287 A1

(12) **EUROPEAN PATENT APPLICATION**
published in accordance with Art. 153(4) EPC

(43) Date of publication:
**08.04.2026 Bulletin 2026/15**

(21) Application number: **24815395.9**

(22) Date of filing: **24.05.2024**

(51) International Patent Classification (IPC):
***C08L 23/10*** *(2006.01)* ***C08K 3/013*** *(2018.01)*
***C08K 5/13*** *(2006.01)*

(52) Cooperative Patent Classification (CPC):
**C08K 3/013; C08K 5/13; C08L 23/10**

(86) International application number:
**PCT/JP2024/019162**

(87) International publication number:
**WO 2024/247912 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.05.2023 JP 2023087893**

(71) Applicant: **Sumitomo Chemical Company, Limited**
**Tokyo 103-6020 (JP)**

(72) Inventors:
- **FUKURODA, Hiroshi**
  **Ichihara-shi, Chiba 299-0195 (JP)**
- **KAMEO, Koji**
  **Ichihara-shi, Chiba 299-0195 (JP)**

(74) Representative: **Winter, Brandl - Partnerschaft mbB**
**Alois-Steinecker-Straße 22**
**85354 Freising (DE)**

# (54) PROPYLENE-BASED RESIN COMPOSITION

(57) Provided is a propylene-based resin composition having excellent antistatic performance. In a propylene-based resin composition containing a propylene-based polymer and a di-tert-butylphenol, a content of the di-tert-butylphenol is 10 to 1800 ppm by mass when a total mass of the propylene-based resin composition is 100 parts by mass.

EP 4 722 287 A1

**Description**

TECHNICAL FIELD

The present invention relates to a propylene-based resin composition and a molded article thereof.

BACKGROUND ART

A propylene-based resin composition containing a propylene-based polymer has favorable mechanical properties and can be used for various applications. The propylene-based resin composition can be suitably used, for example, as a material for forming a member (interior material) in a vehicle interior of an automobile.

PRIOR ART DOCUMENTS

PATENT DOCUMENT

Patent Document 1: JP-A-2001-019825

SUMMARY OF THE INVENTION

PROBLEMS TO BE SOLVED BY THE INVENTION

However, since the propylene-based resin composition has low conductivity, static electricity generated during molding processing or the like is not easily dissipated, and thus dust or dirt may adhere to a product that is a resulting molded article.

The present invention has been made in view of the above problem, and an object thereof is to provide a propylene-based resin composition and the like having excellent antistatic performance.

MEANS FOR SOLVING THE PROBLEMS

As a result of intensive studies to solve the above problem, the present inventors have found that the above problem can be solved by adding an appropriate amount of di-tert-butylphenol to a propylene-based resin composition, thereby completing the present invention.

[1] A propylene-based resin composition containing a propylene-based polymer and a di-tert-butylphenol, wherein a content of the di-tert-butylphenol is 10 to 1800 ppm by mass when a total mass of the propylene-based resin composition is 100 parts by mass.

[2] The propylene-based resin composition according to [1], wherein a content of the propylene-based polymer is 50 parts by mass or more when a total mass of the propylene-based resin composition is 100 parts by mass.

[3] The propylene-based resin composition according to [1] or [2], further containing an ethylene-$\alpha$-olefin copolymer.

[4] The propylene-based resin composition according to [3], wherein a content of the ethylene-$\alpha$-olefin copolymer is 1 to 40 parts by mass when a mass of the propylene-based resin composition is 100 parts by mass.

[5] The propylene-based resin composition according to any one of [1] to [4], further containing an inorganic filler.

[6] The propylene-based resin composition according to [5], wherein a content of the inorganic filler is 1 to 40 parts by mass when a total mass of the propylene-based resin composition is 100 parts by mass.

[7] The propylene-based resin composition according to any one of [1] to [6], further containing an ethylene-$\alpha$-olefin copolymer and an inorganic filler.

[8] A molded article containing the propylene-based resin composition according to any one of [1] to [7].

EFFECT OF THE INVENTION

According to the present invention, it is possible to provide a propylene-based resin composition having excellent antistatic performance and a molded article of the propylene-based resin composition.

MODE FOR CARRYING OUT THE INVENTION

Hereinafter, an embodiment according to the present invention will be specifically described. The present

invention is not limited to the specific embodiment described below.

Description of terms

In describing the embodiment of the present invention, first, commonly used terms will be described.
In the present specification, "monomer unit" means a constituent unit (residue) derived from a monomer contained in a polymer obtained by polymerizing a monomer.
In the present specification, "a-olefin" means an olefin containing a carbon atom chain having three or more carbon atoms with a carbon-carbon double bond on a terminal side ($\alpha$-position) thereof.
In the present specification, "limiting viscosity (unit: dL/g)" is a value measured at a temperature of 135°C using tetralin as a solvent by the following method.
Specifically, the limiting viscosity can be determined by an "extrapolation method" in which values of reduced viscosity are measured for a plurality of concentrations using an Ubbelohde viscometer, respectively, the values of reduced viscosity are plotted with respect to the concentrations, respectively, and the concentrations are extrapolated to zero. More specifically, the limiting viscosity can be determined by a method for measuring values of reduced viscosity for three points of concentrations of 0.1 g/dL, 0.2 g/dL, and 0.5 g/dL, respectively, using the method described on page 491 of "Polymer Solution, Polymer Experiment 11" (published by KYORITSU SHUPPAN CO., LTD., 1982), plotting the values of reduced viscosity with respect to the concentrations, respectively, and extrapolating the concentrations to zero.
In the present specification, "melt flow rate (MFR)" means a "melt mass flow rate", and is a melt flow rate measured in accordance with JIS K7210-1:2014 and K7210-2:2014 under conditions of a temperature of 230°C and a load of 2.16 kgf.
In the present specification, unless otherwise specified, "%" means % by mass, and "parts" means "parts by mass".

(Propylene-based resin composition)

A propylene-based resin composition according to the embodiment of the present invention is a propylene-based resin composition containing a propylene-based polymer (A) and a di-tert-butylphenol (B), in which a content of the di-tert-butylphenol (B) is 10 to 1800 ppm by mass when a total mass of the propylene-based resin composition is 100 parts by mass.
The propylene-based resin composition of the present embodiment has excellent antistatic properties.
Hereinafter, components that can be contained in the propylene-based resin composition of the present embodiment will be described.

Propylene-based polymer (A)

The propylene-based polymer is a polymer containing a propylene unit in an amount of more than 50% by mass with respect to all constituent units (100% by mass). The content of the propylene unit in the propylene-based polymer is usually 100% by mass or less.
Examples of the propylene-based polymer include a propylene homopolymer, and a copolymer obtained by polymerizing propylene and one or more other monomers that can be copolymerized with the propylene in combination at any ratio. The copolymer may be a random copolymer or a block copolymer.
Examples of the other monomers that can be copolymerized with propylene include an olefin other than propylene (for example, ethylene or an olefin having 4 or more carbon atoms). The number of carbon atoms of the olefin may be 12 or less.
The olefin having 4 or more carbon atoms may be a linear olefin or a branched olefin. The olefin having 4 or more carbon atoms may be an olefin having a cyclic structure, and may be, for example, an $\alpha$-olefin having a cyclic structure, such as vinylcyclopropane or vinylcyclobutane.
Examples of the olefin other than propylene that can be copolymerized with propylene include an $\alpha$-olefin other than propylene (for example, ethylene, propylene, 1-butene, 1-pentene, 1-hexene, 4-methyl-1-pentene, 1-octene, or 1-decene). The olefin other than propylene that can be copolymerized with propylene is preferably ethylene, propylene, 1-butene, 1-pentene, 1-hexene, 4-methyl-1-pentene, 1-octene, or 1-decene, and more preferably ethylene, propylene, 1-butene, 1-hexene, or 1-octene.

(Propylene-based random copolymer)

Examples of the propylene-based random copolymer include: a random copolymer containing a propylene unit and an ethylene unit (hereinafter, referred to as a random copolymer (1)); a random copolymer containing a propylene unit

and an α-olefin unit having 4 or more carbon atoms (hereinafter, referred to as a random copolymer (2)); and a random copolymer containing a propylene unit, an ethylene unit, and an α-olefin unit having 4 or more carbon atoms (hereinafter, referred to as a random copolymer (3)).

The α-olefin having 4 or more carbon atoms and capable of constituting the propylene-based random copolymer is preferably an α-olefin having 4 to 10 carbon atoms. Examples of the α-olefin having 4 to 10 carbon atoms include 1-butene, 1-pentene, 1-hexene, 4-methyl-1-pentene, 1-octene, and 1-decene. 1-Butene, 1-hexene, and 1-octene are preferable.

Examples of the random copolymer (2) include a propylene-1-butene random copolymer, a propylene-1-hexene random copolymer, a propylene-1-octene random copolymer, and a propylene-1-decene random copolymer.

Examples of the random copolymer (3) include a propylene-ethylene-1-butene copolymer, a propylene-ethylene-1-hexene copolymer, a propylene-ethylene-1-octene copolymer, and a propylene-ethylene-1-decene copolymer.

The content of the ethylene unit in the random copolymer (1) is preferably 0.1 to 40% by mass.

The content of the α-olefin unit having 4 or more carbon atoms in the random copolymer (2) is preferably 0.1 to 40% by mass, more preferably 0.1 to 30% by mass, and still more preferably 2 to 15% by mass.

The total content of the ethylene unit and the α-olefin unit having 4 or more carbon atoms in the random copolymer (3) is preferably 0.1 to 40% by mass, more preferably 0.1 to 30% by mass, and still more preferably 2 to 15% by mass.

The content of the propylene unit in each of the random copolymers (1) to (3) is preferably 60 to 99.9% by mass.

The propylene-based polymer (A) can be produced, for example, by the following polymerization method using a polymerization catalyst.

Examples of the polymerization catalyst include: a Ziegler type catalyst system; a Ziegler-Natta type catalyst system; a catalyst system containing a transition metal compound of group 4 of the periodic table having a cyclopentadienyl ring and an alkylaluminoxane; a catalyst system containing a transition metal compound of group 4 of the periodic table having a cyclopentadienyl ring, a compound that reacts with the transition metal compound to form an ionic complex, and an organic aluminum compound; and a catalyst system in which a catalyst component (for example, a transition metal compound of group 4 of the periodic table having a cyclopentadienyl ring, a compound that forms an ionic complex, or an organic aluminum compound) is supported on inorganic particles (for example, silica or clay minerals) and modified. In addition, a prepolymerized catalyst prepared by prepolymerizing a monomer such as ethylene or an α-olefin in the presence of such a catalyst system may be used. Examples of the Ziegler-Natta type catalyst system include a catalyst system using a titanium-containing solid transition metal component and an organometallic component in combination.

Examples of such a catalyst system include catalyst systems described in JP-A-61-218606, JP-A-5-194685, JP-A-7-216017, JP-A-9-316147, and JP-A-10-212319, and examples of a heterophasic propylene polymer material include a catalyst system described in JP-A-2004-182981.

Examples of a polymerization method include bulk polymerization, solution polymerization, and gas phase polymerization. Here, the bulk polymerization refers to a method for performing polymerization using a liquid olefin as a medium at a polymerization temperature. The solution polymerization refers to a method for performing polymerization in an inert hydrocarbon solvent such as propane, butane, isobutane, pentane, hexane, heptane, or octane. The gas phase polymerization refers to a method for polymerizing a monomer in a gaseous state in a medium which is the monomer in a gaseous state.

In performing the polymerization method, examples of a polymerization type thereof include a batch type, a continuous type, and a combination thereof. The polymerization type may be a multistage type performed using a plurality of polymerization reaction tanks connected in series.

Various conditions (a polymerization temperature, a polymerization pressure, a monomer concentration, a catalyst putting amount, a polymerization time, and the like) in the polymerization method can be appropriately determined according to an intended propylene-based polymer.

In production of the propylene-based polymer, by holding an obtained propylene-based polymer at a temperature at which a residual solvent and impurities such as the oligomer can volatilize and which is lower than a temperature at which the propylene-based polymer melts, a treatment of removing the residual solvent contained in the obtained propylene-based polymer, the oligomer having an ultra-low molecular weight by-produced during the production, and the like may be performed. Examples of a method for removing a residual solvent and impurities such as an oligomer include methods described in JP-A-55-75410 and JP-B2-2565753.

The propylene homopolymer has a limiting viscosity [η] of preferably 0.1 to 5 dL/g, more preferably 0.5 to 4 dL/g, still more preferably 0.6 to 3 dL/g from a viewpoint of improving a fluidity of the propylene-based resin composition at the time of melting and toughness of a molded article obtained by molding the propylene-based resin composition.

In addition, the propylene homopolymer has a molecular weight distribution Mw/Mn of preferably 2 or more and less than 10, more preferably 3 to 8, still more preferably 3 to 6 from a viewpoint of improving fluidity of the propylene-based resin composition at the time pf melting and toughness of a molded article containing the resin composition. Here, Mw represents a weight average molecular weight, and Mn represents a number average molecular weight. The molecular weight distribution can be measured by gel permeation chromatography (GPC).

The propylene-based resin composition of the present embodiment may contain two or more types of propylene-based polymers as the propylene-based polymer (A).

When the propylene-based resin composition contains two or more types of propylene-based polymers, examples of a combination of the two or more types of propylene polymers include a combination of two or more types of propylene homopolymers having different weight average molecular weights and the like, and a heterophasic propylene polymer material.

Here, the "heterophasic propylene polymer material" means a material containing two or more types of propylene-based polymers, in which the two or more types of propylene-based polymers are incompatible with each other and form different phases.

Examples of the heterophasic propylene polymer material include a material containing a combination of the following polymer (I) and polymer (II).

Here, the polymer (I) is a polymer having a propylene unit in an amount of more than 80% by mass and 100% by mass or less with respect to the amount of all constituent units. The polymer (I) may be a propylene homopolymer or a copolymer of propylene and another monomer. The total content of monomer units other than the propylene unit in the polymer (I) is usually 0% by mass or more and less than 20% by mass, and may be 0% by mass, or may be 0.01% by mass or more when the mass of the polymer (I) is 100% by mass.

Examples of the monomer unit other than the propylene unit which may be contained in the polymer (I) include an ethylene unit and an $\alpha$-olefin unit having 4 or more carbon atoms.

The $\alpha$-olefin having 4 or more carbon atoms and capable of constituting the polymer (I) is preferably an $\alpha$-olefin having 4 to 10 carbon atoms, more preferably 1-butene, 1-hexene, or 1-octene, and still more preferably 1-butene.

Examples of the polymer (I) include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.

Among these polymers, the polymer (I) is preferably a propylene homopolymer, a propylene-ethylene copolymer, a propylene-1-butene copolymer, or a propylene-ethylene-1-butene copolymer, and more preferably a propylene homopolymer from a viewpoint of improving rigidity of a molded article obtained by molding the propylene-based resin composition.

The polymer (II) is a copolymer of a propylene unit and at least one type of monomer unit selected from the group consisting of an ethylene unit and an $\alpha$-olefin unit having 4 or more carbon atoms. The polymer (II) is preferably a polymer having the propylene unit in an amount of more than 0% by mass and 90% by mass or less with respect to the amount of all constituent units, and more preferably a polymer having the propylene unit in an amount of more than 0% by mass and 80% by mass or less. The polymer (II) may be a random copolymer or a block copolymer.

The total content of the ethylene unit and the $\alpha$-olefin unit having 4 or more carbon atoms in the polymer (II) is preferably 20 to 80% by mass, and more preferably 20 to 60% by mass when the mass of the polymer (II) is 100% by mass.

The $\alpha$-olefin having 4 or more carbon atoms and capable of constituting the polymer (II) is preferably an $\alpha$-olefin having 4 to 10 carbon atoms, and examples thereof include those similar to the examples of the $\alpha$-olefin capable of constituting the polymer (I) described above.

Examples of the polymer (II) include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and a propylene-1-decene copolymer. The polymer (II) is preferably a propylene-ethylene copolymer, a propylene-1-butene copolymer, or a propylene-ethylene-1-butene copolymer, and more preferably a propylene-ethylene copolymer.

The content of the polymer (II) in the heterophasic propylene polymer material is preferably 1 to 50% by mass, more preferably 1 to 45% by mass, still more preferably 5 to 40% by mass, and particularly preferably 7 to 35% by mass when the total mass of the polymer (I) and the polymer (II) is 100% by mass.

Each of the polymer (I) and the polymer (II) may contain only one type of polymer or may contain two or more types of polymers.

Examples of the heterophasic propylene polymer material include a combination of a propylene homopolymer and a (propylene-ethylene) copolymer, a combination of a propylene homopolymer and a (propylene-ethylene-1-butene) copolymer, a combination of a propylene homopolymer and a (propylene-ethylene-1-hexene) copolymer, a combination of a propylene homopolymer and a (propylene-ethylene-1-octene) copolymer, a combination of a propylene homopolymer and a (propylene-1-butene) copolymer, a combination of a propylene homopolymer and a (propylene-1-hexene) copolymer, a combination of a propylene homopolymer and a (propylene-1-octene) copolymer, and a combination of a propylene homopolymer and a (propylene-1-decene) copolymer, in which the polymer (I) is a propylene homopolymer.

The heterophasic propylene polymer material may be a combination in which the polymer (I) is a polymer containing a propylene unit and a monomer unit other than the propylene unit. When the type of the polymer (I) is described first and the type of the polymer (II) is described later, specific examples of the heterophasic propylene polymer material include a combination of a (propylene-ethylene) copolymer and a (propylene-ethylene) copolymer, a combination of a

(propylene-ethylene) copolymer and a (propylene-ethylene-1-butene) copolymer, a combination of a (propylene-ethylene) copolymer and a (propylene-ethylene-1-hexene) copolymer, a combination of a (propylene-ethylene) copolymer and a (propylene-ethylene-1-octene) copolymer, a combination of a (propylene-ethylene) copolymer and a (propylene-ethylene-1-decene) copolymer, a combination of a (propylene-ethylene) copolymer and a (propylene-1-butene) copolymer, a combination of a (propylene-ethylene) copolymer and a (propylene-1-hexene) copolymer, a combination of a (propylene-ethylene) copolymer and a (propylene-1-octene) copolymer, a combination of a (propylene-ethylene) copolymer and a (propylene-1-decene) copolymer, a combination of a (propylene-1-butene) copolymer and a (propylene-ethylene) copolymer, a combination of a (propylene-1-butene) copolymer and a (propylene-ethylene-1-butene) copolymer, a combination of a (propylene-1-butene) copolymer and a (propylene-ethylene-1-hexene) copolymer, a combination of a (propylene-1-butene) copolymer and a (propylene-ethylene-1-octene) copolymer, a combination of a (propylene-1-butene) copolymer and a (propylene-ethylene-1-decene) copolymer, a combination of a (propylene-1-butene) copolymer and a (propylene-1-butene) copolymer, a combination of a (propylene-1-butene) copolymer and a (propylene-1-hexene) copolymer, a combination of a (propylene-1-butene) copolymer and a (propylene-1-octene) copolymer, a combination of a (propylene-1-butene) copolymer and a (propylene-1-decene) copolymer, a combination of a (propylene-1-hexene) copolymer and a (propylene-1-hexene) copolymer, a combination of a (propylene-1-hexene) copolymer and a (propylene-1-octene) copolymer, a combination of a (propylene-1-hexene) copolymer and a (propylene-1-decene) copolymer, a combination of a (propylene-1-octene) copolymer and a (propylene-1-octene) copolymer, and a combination of a (propylene-1-octene) copolymer and a (propylene-1-decene) copolymer.

The heterophasic propylene polymer material that can be contained in the propylene-based resin composition of the present embodiment is preferably a combination of a propylene homopolymer and a (propylene-ethylene) copolymer, a combination of a propylene homopolymer and a (propylene-ethylene-1-butene) copolymer, a combination of a (propylene-ethylene) copolymer and a (propylene-ethylene) copolymer, a combination of a (propylene-ethylene) copolymer and a (propylene-ethylene-1-butene) copolymer, or a combination of a (propylene-1-butene) copolymer and a (propylene-1-butene) copolymer, and more preferably a combination of a propylene homopolymer and a (propylene-ethylene) copolymer.

The heterophasic propylene polymer material can be produced by multistage polymerization including a former-stage polymerization step of generating the polymer (I) and a polymerization step of further generating the polymer (II) in the presence of the polymer (I) generated in the former step. The polymerization can be performed using the catalyst systems exemplified as a catalyst that can be used for producing the propylene-based polymer.

The propylene-based polymer (A) preferably contains one or more selected from the group consisting of a propylene homopolymer and a heterophasic propylene polymer material.

An isotactic pentad fraction (also referred to as a [mmmm] fraction) of the propylene-based polymer (A) as measured by $^{13}$C-NMR is preferably 0.97 or more, and more preferably 0.98 or more. The closer the isotactic pentad fraction of the propylene-based polymer is to 1, the higher stereoregularity of a molecular structure of the propylene-based polymer is, and the higher crystallinity of the propylene-based polymer is. When the propylene-based polymer is a copolymer, the isotactic pentad fraction can be measured for a chain of propylene units in the copolymer.

A melt flow rate (MFR) of the propylene-based polymer (A) as measured under conditions of a temperature of 230°C and a load of 2.16 kgf is preferably 0.1 g/10 min or more, more preferably 0.5 g/10 min or more, preferably 500 g/10 min or less, more preferably 400 g/10 min or less, and preferably 0.1g/10 min to 500 g/10 min from a viewpoint of improving processability in molding the propylene-based resin composition.

Note that a limiting viscosity of the propylene-based polymer (A) of the present embodiment is usually less than 5 dL/g and 0.1 dL/g or more, preferably 0.5 dL/g or more, more preferably 0.7 dL/g or more and less than 4 dL/g, and still more preferably 0.8 dL/g or more and less than 3 dL/g from a viewpoint of improving fluidity and processability of the propylene-based resin composition.

In the present embodiment, a weight average molecular weight of the propylene-based polymer (A) in terms of polystyrene is usually 100,000 to 1,000,000, and preferably 500,000 to 1,000,000 from a viewpoint of improving appearance and elongation properties of a molded article.

The propylene-based polymer (A) may have a molecular weight distribution (Mw/Mn) of usually 10 or less, and preferably has Mw/Mn of 3 to 8 from a viewpoint of improving moldability and mechanical properties.

Here, Mw represents a weight average molecular weight, and Mn represents a number average molecular weight. The weight average molecular weight, the number average molecular weight, and the molecular weight distribution can be measured by gel permeation chromatography (GPC) and calculated in terms of polystyrene.

When the propylene-based polymer is a polymer material containing the polymer (I) and the polymer (II) formed by multistage polymerization, a part of the polymer (I) prepared by the former-stage polymerization is extracted from a polymerization reactor, and a limiting viscosity thereof is determined, a limiting viscosity (hereinafter, referred to as ([η] Total) of the propylene-based polymer finally obtained by multistage polymerization is determined, and a limiting viscosity of the polymer formed by the later-stage polymerization can be calculated using these values of the limiting viscosity and the content of each polymer.

When the polymer material containing the polymer (I) and the polymer (II) is a material produced by a method in which the polymer (I) is obtained in a former-stage polymerization step and the polymer (II) is obtained in a later-stage polymerization step, procedures for measuring and calculating the content and the limiting viscosity number ([η]Total, [η]I, and [η]II) of each of the polymer (I) and the polymer (II) are as follows.

From the limiting viscosity ([η]I) of the polymer (I) obtained in the former-stage polymerization step, the limiting viscosity ([η]Total) of the final polymer (that is, the polymer containing the polymer (I) and the polymer (II)) after the later-stage polymerization step measured by the above method, and the content of the polymer (II) contained in the final polymer, the limiting viscosity ([η]II) of the polymer (II) can be calculated by the following formula.

$$[\eta]II = ([\eta]Total - [\eta]I \times XI)/XII$$

[η]Total: limiting viscosity (dl/g) of final polymer (unit: dL/g)
[η]I: limiting viscosity of polymer (I) (unit: dL/g)
XI: mass ratio of polymer (I) to final polymer
XII: mass ratio of polymer (II) to final polymer
Note that XI and XII can be determined from a mass balance at the time of polymerization.

The limiting viscosity (hereinafter, referred to as [η]I) of the polymer (I) is preferably 0.1 to 5 dL/g, more preferably 0.5 to 4 dL/g, and still more preferably 0.6 to 3 dL/g.

The limiting viscosity (hereinafter, referred to as [η]II) of the polymer (II) is preferably 1 to 10 dL/g, more preferably 1.5 to 9 dL/g, and still more preferably 2 to 8 dL/g.

A ratio of [η]II to [η]I ([η]II/[η]I) is preferably 1 to 20, and more preferably 1 to 10.

The mass ratio XII of the polymer (II) to the final polymer may be calculated by the following formula using a crystal melting heat amount of each of the polymer (I) and the final polymer.

$$XII = 1 - (\Delta Hf)T/(\Delta Hf)P$$

(ΔHf) T: melting heat amount (unit: cal/g) of final polymer (polymer (I) and polymer (II))
(ΔHf)P: melting heat amount (cal/g) of polymer (I)

The molecular weight distribution (Mw/Mn) of the polymer (I) measured by GPC is preferably 1 or more and less than 10, more preferably 2 or more and less than 7, and still more preferably 3 or more and less than 5.

The content of the propylene-based polymer (A) in the propylene-based resin composition of the present embodiment is preferably 50 parts by mass or more, may be 60 parts by mass or more, may be 70 parts by mass or more, may be 80 parts by mass or more, may be 90 parts by mass or more, may be 99 parts by mass or less, may be 50 to 95 parts by mass, or may be 60 to 95 parts by mass when the total mass of the propylene-based resin composition is 100 parts by mass.

Di-tert-butylphenol (B)

The propylene-based resin composition of the present embodiment contains a di-tert-butylphenol. Here, specific examples of the "di-tert-butylphenol" include 2,4-di-tert-butylphenol, 2,6-di-tert-butylphenol, and 3,5-di-tert-butylphenol.

A structural formula of 2,4-di-tert-butylphenol is described below.

[Chemical formula 1]

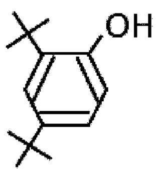

The content of the di-tert-butylphenol in the present embodiment is 10 ppm by mass or more, may be 20 ppm by mass or more, may be 50 ppm by mass or more, may be 70 ppm by mass or more, may be 100 ppm by mass or more, may be 200 ppm by mass or more, may be 250 ppm by mass or more, may be 300 ppm by mass or more, or may be 400 ppm by mass or more when the total mass of the propylene-based resin composition is 100 parts by mass from a viewpoint of

exhibiting antistatic performance. From a similar viewpoint, the content of the di-tert-butylphenol is 1800 ppm by mass or less, may be 1600 ppm by mass or less, may be 1400 ppm by mass or less, may be 1200 ppm by mass or less, may be 1000 ppm by mass or less, may be 900 ppm by mass or less, may be 800 ppm by mass or less, may be 700 ppm by mass or less, or may be 600 ppm by mass or less when the total mass of the propylene-based resin composition is 100 parts by mass.

In the present embodiment, the content of the di-tert-butylphenol is calculated on the basis of a raw material input amount in production of the propylene-based resin composition, but may be measured from the propylene-based resin composition, for example, a pellet or a molded article when the raw material input amount is unknown.

When the content of the di-tert-butylphenol is measured from the resin composition, specifically, the content of the di-tert-butylphenol generated when a molded article obtained by molding the propylene-based resin composition under the following injection molding conditions is heated at 100°C for 15 minutes can be defined as the content.

Injection molding conditions: cylinder temperature; 200°C, die temperature; 40°C, fill pressure; 15 MPa, held pressure; 4.3 MPa, pressure holding time; 40 seconds

More specifically, quantification can be performed by, for example, injection-molding the propylene-based resin composition of the present embodiment using any conventionally known suitable injection molding machine under the above injection molding conditions to form 2 g of a cut piece of a molded article, and performing gas chromatographic measurement on the di-tert-butylphenol generated when the cut piece is heated at 100°C for 15 minutes using any conventionally known suitable gas chromatographic measurement apparatus.

When the content of the di-tert-butylphenol in the propylene-based resin composition is as described above, antistatic properties can be enhanced.

Ethylene-α-olefin copolymer (C)

The propylene-based resin composition of the present embodiment can contain an ethylene-α-olefin copolymer.

In the ethylene-α-olefin copolymer (C), a sum of the content of a monomer unit derived from ethylene and the content of a monomer unit derived from an α-olefin having 4 or more carbon atoms may be 100% by mass when the total mass of the ethylene-α-olefin copolymer is 100% by mass.

Examples of the α-olefin having 4 or more carbon atoms include an α-olefin having 4 to 12 carbon atoms. Examples of the α-olefin having 4 to 12 carbon atoms include 1-butene, 1-pentene, 1-hexene, 4-methyl-1-pentene, 1-octene, and 1-decene. Among these compounds, 1-butene, 1-hexene, and 1-octene are preferable as the α-olefin having 4 or more carbon atoms. The α-olefin may be an α-olefin having a cyclic structure, such as vinylcyclopropane or vinylcyclobutane.

Examples of the ethylene-α-olefin copolymer (C) include an ethylene-1-butene copolymer, an ethylene-1-hexene copolymer, an ethylene-1-octene copolymer, an ethylene-1-decene copolymer, an ethylene-(3-methyl-1-butene) copolymer, and a copolymer of ethylene and an α-olefin having a cyclic structure.

In the ethylene-α-olefin copolymer (C), the content of the monomer unit derived from an α-olefin having 4 or more carbon atoms is preferably 1 to 49% by mass, more preferably 5 to 49% by mass, and still more preferably 24 to 49% by mass when the total mass of the ethylene-α-olefin copolymer is used as a standard (100% by mass).

The ethylene-α-olefin copolymer (C) preferably has an MFR (measured at a temperature of 190°C and a load of 2.16 kgf) of 0.1 g/10 min or more and 100 g/10 min or less. The MFR is more preferably 0.5 g/10 min or more and 70 g/10 min or less.

A density of the ethylene-α-olefin copolymer (C) is preferably 0.850 to 0.890 g/cm$^3$, more preferably 0.850 to 0.880 g/cm$^3$, and still more preferably 0.855 to 0.870 g/cm$^3$ from a viewpoint of improving impact resistance of a molded article.

The ethylene-α-olefin copolymer (C) can be produced by polymerizing ethylene and an α-olefin having 4 or more carbon atoms using a polymerization catalyst.

Examples of the polymerization catalyst for production include a homogeneous catalyst represented by a metallocene catalyst and a Ziegler-Natta type catalyst.

Examples of the homogeneous catalyst include: a catalyst containing a transition metal compound of group 4 of the periodic table having a cyclopentadienyl ring and an alkylaluminoxane; a catalyst containing a transition metal compound of group 4 of the periodic table having a cyclopentadienyl ring, a compound that reacts with the transition metal compound to form an ionic complex, and an organic aluminum compound; and a catalyst in which a catalyst component (a transition metal compound of group 4 of the periodic table having a cyclopentadienyl ring, a compound that forms an ionic complex, an organic aluminum compound, or the like) is supported on inorganic particles (silica, clay minerals, or the like) and modified.

Examples of the Ziegler-Natta type catalyst include a catalyst in which a titanium-containing solid transition metal component and an organometallic component are combined.

As the ethylene-α-olefin copolymer (C), a commercially available product may be used. Examples of the commercially available ethylene-α-olefin copolymer (C) include ENGAGE (registered trademark) manufactured by

Dow Chemical Japan Co., Ltd., TAFMER (registered trademark) manufactured by Mitsui Chemicals, Inc., NEO-ZEX (registered trademark) and ULTZEX (registered trademark) manufactured by Prime Polymer Co., Ltd., and EXCELLENE FX (registered trademark), SUMIKATHENE (registered trademark), and ESPRENE SPO (registered trademark) manufactured by Sumitomo Chemical Co., Ltd.

The content of the ethylene-α-olefin copolymer (C) in the propylene-based resin composition is usually 1% by mass or more and 40 parts by mass or less, preferably 5 parts by mass or more and 35 parts by mass or less, and more preferably 5 parts by mass or more and 30 parts by mass or less when the total amount of the propylene-based resin composition is 100 parts by mass.

Inorganic filler (D)

The propylene-based resin composition according to the present embodiment can further contain an inorganic filler (D) from a viewpoint of improving mechanical properties, dimensional stability, and the like.

Examples of the inorganic filler (D) include (i) a fibrous inorganic filler and (ii) a non-fibrous inorganic filler. In the present embodiment, two or more types of inorganic fillers (D) may be used in combination. Hereinafter, the inorganic filler (D) will be described specifically.

(i) Fibrous inorganic filler

In the present embodiment, the fibrous inorganic filler preferably has an average fiber diameter of 0.2 μm to 20 μm, an average fiber length of 5 μm to 200 μm, and an aspect ratio of 10 to 30. The fibrous inorganic filler more preferably has an average fiber diameter of 0.3 μm to 10 μm, an average fiber length of 7 μm to 150 μm, and an aspect ratio of 12 to 25 from a viewpoint of improving rigidity of a molded article and improving appearance of the molded article.

The average fiber diameter and the average fiber length of the fibrous inorganic filler are, for example, an average value of fiber diameters and an average value of fiber lengths measured by randomly selecting 50 or more fibers from an image of the fibrous inorganic filler obtained by an electron microscope, respectively, and the aspect ratio can be calculated using these average values.

Examples of the fibrous inorganic filler include fibrous magnesium oxysulfate, potassium titanate fibers, magnesium hydroxide fibers, aluminum borate fibers, calcium silicate fibers, calcium carbonate fibers, carbon fibers, glass fibers, and metal fibers. Among these, fibrous magnesium oxysulfate and calcium silicate fibers are preferably used.

The fibrous inorganic filler can be used as it is. The fibrous inorganic filler may be further surface-treated with, for example, a silane coupling agent or a higher fatty acid metal salt for use from a viewpoint of improving interfacial adhesion and further improving dispersibility.

Examples of the higher fatty acid metal salt that can be used for the surface treatment include calcium stearate, magnesium stearate, and zinc stearate.

In the present embodiment, examples of a form of the fibrous inorganic filler include a powdery form, a flaky form, and a granular form. In the present embodiment, the fibrous inorganic filler may be in any one of the above forms. A granular fibrous inorganic filler is preferably used as the fibrous inorganic filler because of favorable handleability.

(ii) Non-fibrous inorganic filler

Examples of the non-fibrous inorganic filler include talc, mica, calcium carbonate, barium sulfate, magnesium carbonate, clay, alumina, calcium sulfate, silica sand, carbon black, titanium oxide, magnesium hydroxide, molybdenum, silica earth, sericite, SHIRASU, calcium hydroxide, calcium sulfite, sodium sulfate, bentonite, and graphite. Talc is preferably used from a viewpoint of improving impact strength of a molded article and improving appearance.

An average particle diameter of the non-fibrous inorganic filler is preferably 15 μm or less, and more preferably 10 μm or less. Here, the average particle diameter of the non-fibrous inorganic filler is determined on the basis of volume-based particle diameter distribution measurement data measured by a laser diffraction method according to a method specified in JIS R1629, and means a particle diameter (50% equivalent particle diameter) when accumulation of the number of particles from a side having a smaller particle diameter reaches 50% in the particle diameter distribution measurement data. The particle diameter defined in this way is generally referred to as "50% equivalent particle diameter" and is denoted by "D50".

The non-fibrous inorganic filler can be used as it is. The non-fibrous inorganic filler may be surface-treated with a silane coupling agent, a titanium coupling agent, or a surfactant for use from a viewpoint of improving interfacial adhesion and improving dispersibility.

Examples of the surfactant that can be used for the surface treatment include a higher fatty acid, a higher fatty acid ester, a higher fatty acid amide, and a higher fatty acid salt.

The fibrous inorganic filler may be used as it is, or may be surface-treated with a silane coupling agent or a higher

fatty acid metal salt for use from a viewpoint of improving interfacial adhesion and improving dispersibility.

The content of the inorganic filler in the polyolefin-based resin composition is usually 1 part by mass or more and 40 parts by mass or less, preferably 5 parts by mass or more and 35 parts by mass or less, and more preferably 5 parts by mass or more and 30 parts by mass or less when the total amount of the propylene-based resin composition is 100 parts by mass.

Other additives (E)

The propylene-based resin composition of the present embodiment may contain other various additives (E) as further optional components in addition to the components described above.

Examples of such an additive as an optional component include an antioxidant, a neutralizer, an ultraviolet absorber, a light stabilizer, a lubricant, an antistatic agent, a colorant (for example, an inorganic pigment or an organic pigment), a flame retardant, an elastomer, an antiblocking agent, a processing aid, an organic peroxide, a pigment dispersant, a foaming agent, a foam nucleating agent, a plasticizer, a crosslinking agent, a crosslinking aid, a brightness-enhancing agent, an antibacterial agent, a light diffusing agent, and a molecular weight regulator.

The propylene-based resin composition of the present embodiment may contain one of these additives singly or may contain two or more optional components in combination at any ratio.

In particular, an antioxidant, a neutralizing agent, an ultraviolet absorber, a light stabilizer, and a coloring agent are suitably used as the additive (E). Hereinafter, the additive (E) will be described specifically. Note that the propylene-based resin composition of the present embodiment is preferably a propylene-based resin composition further containing, in addition to the above components, one or more selected from the group consisting of an organic peroxide, a neutralizing agent, an antioxidant, an ultraviolet absorber, a light stabilizer, and a colorant.

The propylene-based resin composition may contain another additive such as a resin or a rubber as additives other than the additives described above.

Examples of the other additive include polystyrenes (for example, polystyrene, poly(p-methylstyrene), and poly($\alpha$-methylstyrene), an acrylonitrile/styrene copolymer (AS) resin, an acrylonitrile/butadiene/styrene copolymer (ABS) resin, a special acrylic rubber/acrylonitrile/styrene copolymer (AAS) resin, an acrylonitrile/chlorinated polyethylene/styrene copolymer (ACS) resin, polychloroprene, a chlorinated rubber, polyvinyl chloride, polyvinylidene chloride, an acrylic resin, an ethylene/vinyl alcohol copolymer resin, a fluororesin, polyacetal, a grafted polyphenylene ether resin and a polyphenylene sulfide resin, polyurethane, polyamide, a polyester resin (for example, polyethylene terephthalate or polybutylene terephthalate), polycarbonate, polysulfone, polyether ether ketone, polyether sulfone, a thermoplastic resin such as an aromatic polyester resin, an epoxy resin, a diallyl phthalate prepolymer, a silicone resin, a silicone rubber, polybutadiene, 1,2-polybutadiene, polyisoprene, a styrene/butadiene copolymer, a butadiene/acrylonitrile copolymer, an epichlorohydrin rubber, an acrylic rubber, a natural rubber, and a PLA resin (polylactic acid) produced by polymerizing a plant-derived monomer extracted from a bio raw material.

(Method for producing propylene-based resin composition)

The propylene-based resin composition of the present embodiment can be produced by melt-kneading the components described above. A temperature at the time of melt kneading may be 180°C or higher, 180 to 300°C, or 180 to 250°C.

Examples of a melt-kneading apparatus in melt-kneading for producing the propylene-based resin composition of the present embodiment include any conventionally known suitable Banbury mixer, single screw extruder, twin-screw co-rotating extruder, and twin-screw counter-rotating extruder.

Specific examples of the melt-kneading apparatus include ZSK (registered trademark) manufactured by Coperion, TEM (registered trademark) manufactured by Toshiba Machine Co., Ltd., TEX (registered trademark) manufactured by The Japan Steel Works, Ltd., KZW (registered trademark) manufactured by TECHNOVEL CORPORATION, CMP (registered trademark) and TEX (registered trademark) manufactured by The Japan Steel Works, Ltd., FCM (registered trademark), NCM (registered trademark), and LCM (registered trademark) manufactured by The Kobe Steel Works, Ltd.

The order of kneading the raw materials is not particularly limited. For example, all the raw materials may be collectively put into a production apparatus and kneaded, or some of selected components may be kneaded, and then the obtained kneaded product and the other components may be kneaded.

Alternatively, the propylene-based resin composition may be produced by melt-kneading an intermediate composition $\alpha$ containing at least two components and other raw materials. For example, the intermediate composition $\alpha$ containing a propylene-based polymer (A1) and a di-tert-butylphenol and a propylene-based polymer (A2) not containing a di-tert-butylphenol may be melt-kneaded. Here, the propylene-based polymer (A1) and the propylene-based polymer (A2) may be the same as or different from each other. The intermediate composition $\alpha$ may further contain

at least one of an ethylene-α-olefin copolymer and an inorganic filler.

The intermediate composition α contains the propylene-based polymer (A) and a di-tert-butylphenol, and the content of the di-tert-butylphenol may be more than 1800 ppm by mass when the total mass of the intermediate composition is 100 parts by mass, and such a material can be used as a master batch.

In addition, at least one of various components such as a propylene-based polymer, an ethylene-α-olefin copolymer, and an inorganic filler provided as raw materials for producing the propylene-based resin composition may be obtained by recycling.

The property of the propylene-based resin composition of the present embodiment is not particularly limited. The propylene-based resin composition of the present embodiment can have, for example, a strand (filament) shape, a sheet shape, a flat plate shape, or a pellet shape. The pellet shape can be produced, for example, by preparing a strand-shaped propylene-based resin composition and then cutting the propylene-based resin composition into an appropriate length.

(Molded article)

The present invention also relates to a molded article obtained by molding a propylene-based resin composition. That is, the propylene-based resin composition of the present embodiment can be suitably used as a material for forming a molded article. The molded article can be obtained by molding the propylene-based resin composition by various molding methods. The shape, size, and the like of the molded article only needs to be appropriately determined.

The propylene-based resin composition of the present embodiment can be used as a material of a molded article such as an automobile material, a home electric appliance material, a monitoring material, an OA device material, a medical material, a drain pan, a toiletry material, a food packaging container, a bottle, a container, a sheet, or a film. Since the propylene-based resin composition of the present embodiment is less likely to be charged and can suppress adhesion of, for example, dust, the propylene-based resin composition can be preferably applied to a material of a vehicle-related member, a home electric appliance material, a food packaging container such as a retort pouch or a pouch that can be heated in a microwave oven.

The propylene-based resin composition of the present embodiment is particularly preferably used as a material for injection molding.

Hereinafter, an example in which the propylene-based resin composition of the present embodiment is used as a material for injection molding to form an injection molded article will be described.

That is, the injection molded article is a molded article obtained by molding the propylene-based resin composition of the present embodiment. The injection molded article generally has excellent dimensional stability.

The injection molded article can be produced by any conventionally known suitable injection molding method. Examples of the injection molding method include an injection foam molding method, a supercritical injection foam molding method, an ultrahigh-speed injection molding method, an injection compression molding method, a gas-assisted injection molding method, a sandwich molding method, a sandwich foam molding method, and an insert outsert molding method.

The molded article (injection molded article) of the present embodiment can be produced by the above method so as to have any suitable shape and dimension corresponding to an application.

Here, examples of a material application of a vehicle-related member which is an injection molded article include: an interior part such as a door trim, a pillar, an instrumental panel, a console, a rocker panel, an armrest, a door panel, or a spare tire cover; an exterior part such as a bumper, a spoiler, a fender, or a side step; a part such as an air intake duct, a coolant reservoir tank, a fender liner, a fan, or an under deflector; and an integrally molded part such as a front end panel.

Examples of the home electric appliance material include a material for a washing machine (an outer tank, an inner tank, a lid, a pulsator, a balancer, or the like), a material for a dryer, a material for a vacuum cleaner, a material for a rice cooker, a material for a pot, a material for a heat incubator, a material for a dishwasher, and a material for an air cleaner.

EXAMPLES

Hereinafter, the present invention will be more specifically described with reference to Examples. Note that the present invention is not limited to the following Examples.

In Examples and Comparative Examples, the following raw materials were used.

Propylene-based polymer (A)

The following heterophasic propylene polymer material was prepared as the propylene-based polymer (A).

Heterophasic propylene polymer material (A-1)

A heterophasic propylene polymer material (A-1) was produced by a gas phase polymerization method in the

presence of a polymerization catalyst obtained by a method described in Example 1 of JP-A-2004-182981. Physical properties of the obtained polymer material are as follows.

Melt flow rate (MFR) (230°C, 2.16 kgf): 32.4 g/10 min
Polymer (I): propylene homopolymer component (part P) limiting viscosity: 1.00 dL/g
Polymer (II): propylene-ethylene random copolymer component (part EP) limiting viscosity: 5.0 dL/g
Propylene-ethylene random copolymer component amount: 16% by weight
Content of structural unit derived from ethylene in polymer (II) (content of monomer unit derived from ethylene with respect to total weight of polymer (II)): 43.0% by weight

Content of structural unit derived from ethylene in polymer (II)

The content of a structural unit derived from ethylene in the polymer (II) was determined from a 13C-NMR spectrum measured under the following conditions on the basis of a report by Kakugo et al. (Macromolecules, 15, 1150-1152 (1982)). A 13C-NMR spectrum was measured under the following conditions using a sample obtained by uniformly dissolving about 200 mg of a heterophasic propylene polymer material in 3 mL of orthodichlorobenzene in a test tube having a diameter of 10 mm.

Measurement temperature: 135°C
Pulse repeating time: 10 seconds
Pulse width: 45°
Number of integrations: 2500
Limiting viscosity (unit: dL/g)

The limiting viscosity number is a value measured at a temperature of 135°C using tetralin as a solvent by the following method.

A reduced viscosity is measured at three points of concentrations of 0.1 g/dL, 0.2 g/dL, and 0.5 g/dL using an Ubbelohde viscometer. The limiting viscosity is determined by an extrapolation method in which the reduced viscosity is plotted with respect to the concentration and the concentration is extrapolated to zero. A method for calculating the limiting viscosity by the extrapolation method is described, for example, on page 491 of "Polymer solution, Polymer Experiment 11" (published by KYORITSU SHUPPAN CO., LTD., 1982).

Di-tert-butylphenol (B)

2,4 di-tert-butylphenol (B-1) manufactured by KANTO CHEMICAL CO., INC., was prepared.

Di-tert-butylphenol (B)

2,6 di-tert-butylphenol (B-2) manufactured by KANTO CHEMICAL CO., INC., was prepared.

Ethylene-$\alpha$-olefin copolymer (C)

The following ethylene-1-octene random copolymer (C-1) was prepared.

"EG8200" manufactured by The Dow Chemical Company

Density: 0.870 g/cm$^3$
MFR (measured at temperature of 190°C and load of 2.16 kgf): 5.0 g/10 min

Inorganic filler (D)

The following inorganic filler was prepared.

Talc (D-1)

"MW UPN TT-H" manufactured by Hayashi Kasei Co., Ltd.
Average particle diameter D50 [L] (laser diffraction method, 50% equivalent particle diameter): 4.90 $\mu$m

Here, the average particle diameter D50 [L] of the talc was measured using a Microtrac particle diameter analyzer

MT-3300EXII manufactured by Nikkiso Co., Ltd., after particles were dispersed under the following conditions according to a method defined in JIS R1629.

Dispersion treatment of particles

Dispersion medium: ethanol
Apparatus: homogenizer
Output: 40 W
Treatment time: 10 minutes

Additive (E)

The following additives (F-1), (F-2), and (F-3) were prepared.

Additive (F-1) "calcium stearate" manufactured by Sakai Chemical Industry Co., Ltd.
Additive (F-2) "IRGAFOS 168" (phosphorus-based antioxidant) manufactured by BASF SE
Additive (F-3) "IRGANOX 1010 (phenolic antioxidant)" manufactured by BASF SE

(Examples A1 to A7, Comparative Examples A1 to A3, and Examples B1 to B3)

Production of propylene-based resin composition

Raw materials having compositions presented in Tables 1 to 3 were melt-kneaded using a twin-screw kneader KZW-15/45MG (cylinder inner diameter: 15.5 mm, screw outer diameter: 15.0 mm, L/D = 45) manufactured by TECHNOVEL CORPORATION to obtain a pellet-shaped propylene-based resin composition.

Conditions for melt-kneading were as follows: cylinder temperature: 200°C; screw rotation speed: 500 rpm; screen mesh: stacking of two types of meshes of 100 mesh and 50 mesh; extrusion amount: 6 kg/hr. Evaluation results are presented in Tables 1 to 3.

Production of injection molded article for evaluating volume resistivity

The pellet-shaped propylene-based resin composition obtained by the above method was dried at 100°C for one hour and then injection-molded under the following conditions to produce a flat plate-shaped molded article having a length of 150 mm, a width of 90 mm, and a thickness of 3.0 mm.

Injection molding machine: SE130DU (mold clamping force: 130 tons, cylinder diameter: 40 mm) manufactured by Sumitomo Heavy Industries, Ltd.

Cylinder temperature: 220°C
Die temperature: 50°C
Injection speed: 20 mm/sec
Cooling time: 30 seconds

Measurement of volume resistivity (unit: Ω•cm)

In accordance with JIS-K6911, the obtained one flat plate-shaped molded article was placed on a large diameter electrode for a flat plate-shaped molded article (SME-8310 manufactured by DKK-TOA CORPORATION), a voltage of 500 V was applied to the molded article, a resistance value after one minute was measured with a digital insulation meter (DSM-8103 manufactured by DKK-TOA CORPORATION), and a volume resistivity value was calculated on the basis of the resistance value. The smaller the volume resistivity value, the better the antistatic properties.

[Table 1]

| Table 1 | Component | | Unit | Example A1 | Example A2 | Example A3 | Example A4 | Example A5 | Example A6 |
|---|---|---|---|---|---|---|---|---|---|
| Composition | A | Heterophasic propylene polymer material (A-1) | % by mass | 100 | 100 | 100 | 100 | 100 | 100 |
| | B | 2,4 Di-tert-butylphenol (B-1) | ppm by mass | 50 | 50 | 250 | 500 | 1000 | - |
| | | 2,6 Di-tert-butylphenol (B-2) | ppm by mass | - | - | - | - | - | 1000 |
| | C | Ethylene-1-octene random copolymer (C-1) | % by mass | - | - | - | - | - | - |
| | D | Talc (D-1) | % by mass | - | - | - | - | - | - |
| | E | Calcium stearate (E-1) | ppm by mass | - | 300 | - | - | - | - |
| | | IRGAFOS168 (E-2) | ppm by mass | - | 200 | - | - | - | - |
| | | IRGANOX1010 (E-3) | ppm by mass | - | 200 | - | - | - | - |
| Volume resistivity | | | Ω cm | 5.30E + 15 | 3.80E + 15 | 2.40E + 15 | 6.10E + 15 | 1.40E + 16 | 4.92E + 15 |

[Table 2]

| Table 2 | Component | | Unit | Comparative Example A1 | Comparative Example A2 | Comparative Example A3 |
|---|---|---|---|---|---|---|
| Composition | A | Heterophasic propylene polymer material (A-1) | % by mass | 100 | 100 | 100 |
| | B | 2,4 Di-tert-butylphenol (B-1) | ppm by mass | - | 2000 | 5000 |
| | | 2,6 Di-tert-butylphenol (B-2) | ppm by mass | - | - | - |
| | C | Ethylene-1-octene random copolymer (C-1) | % by mass | - | - | - |
| | D | Talc (D-1) | % by mass | - | - | - |
| | E | Calcium stearate (E-1) | ppm by mass | - | - | - |
| | | IRGAFOS168 (E-2) | ppm by mass | - | - | - |
| | | IRGANOX1010 (E-3) | ppm by mass | - | - | - |
| Volume resistivity | | | Ω cm | 2.30E + 17 | 1.70E + 17 | 1.70E + 17 |

[Table 3]

| Table 3 | Component | | Unit | Example B1 | Example B2 | Example B3 |
|---|---|---|---|---|---|---|
| Composition | A | Heterophasic propylene polymer material (A-1) | % by mass | 70 | 70 | 70 |
| | B | 2,4 Di-tert-butylphenol (B-1) | ppm by mass | 250 | 500 | 1000 |
| | C | Ethylene-1-octene random copolymer (C-1) | % by mass | 15 | 15 | 15 |
| | D | Talc (D-1) | % by mass | 15 | 15 | 15 |
| | E | Calcium stearate (E-1) | ppm by mass | - | - | - |
| | | IRGAFOS168 (E-2) | ppm by mass | - | - | - |
| | | IRGANOX1010 (E-3) | ppm by mass | - | - | - |
| Volume resistivity | | | Ω cm | 9.23E + 15 | 1.62E + 16 | 1.16E + 16 |

**Claims**

1. A propylene-based resin composition comprising a propylene-based polymer and a di-tert-butylphenol, wherein a content of the di-tert-butylphenol is 10 to 1800 ppm by mass when a total mass of the propylene-based resin composition is 100 parts by mass.

2. The propylene-based resin composition according to claim 1, wherein a content of the propylene-based polymer is 50

parts by mass or more when a total mass of the propylene-based resin composition is 100 parts by mass.

**3.** The propylene-based resin composition according to claim 1 or 2, further comprising an ethylene-α-olefin copolymer.

**4.** The propylene-based resin composition according to claim 3, wherein a content of the ethylene-α-olefin copolymer is 1 to 40 parts by mass when a mass of the propylene-based resin composition is 100 parts by mass.

**5.** The propylene-based resin composition according to any one of claims 1 to 4, further comprising an inorganic filler.

**6.** The propylene-based resin composition according to claim 5, wherein a content of the inorganic filler is 1 to 40 parts by mass when a total mass of the propylene-based resin composition is 100 parts by mass.

**7.** The propylene-based resin composition according to any one of claims 1 to 6, further comprising an ethylene-α-olefin copolymer and an inorganic filler.

**8.** The propylene-based resin composition according to any one of claims 1 to 7, wherein the di-tert-butylphenol is 2,4-di-tert-butylphenol.

**9.** The propylene-based resin composition according to claim 8, wherein a content of 2,4-di-tert-butylphenol is 10 to 1200 ppm by mass when a total mass of the propylene-based resin composition is 100 parts by mass.

**10.** The propylene-based resin composition according to any one of claims 1 to 9, further comprising one or more selected from the group consisting of an organic peroxide, a neutralizing agent, an antioxidant, an ultraviolet absorber, a light stabilizer, and a colorant.

**11.** A molded article comprising the propylene-based resin composition according to any one of claims 1 to 10.

**INTERNATIONAL SEARCH REPORT**

International application No.
**PCT/JP2024/019162**

**A. CLASSIFICATION OF SUBJECT MATTER**

***C08L 23/10***(2006.01)i; ***C08K 3/013***(2018.01)i; ***C08K 5/13***(2006.01)i
FI: C08L23/10; C08K5/13; C08K3/013

According to International Patent Classification (IPC) or to both national classification and IPC

**B. FIELDS SEARCHED**

Minimum documentation searched (classification system followed by classification symbols)

C08L; C08K; C0F6-246

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 112280170 A (HU, Hui) 29 January 2021 (2021-01-29) claims | 1-7, 10, 11 |
| A | | 8, 9 |
| X | CN 111393745 A (WEGO GROUP CO., LTD.) 10 July 2020 (2020-07-10) claims | 1-7, 10 |
| A | | 8, 9 |
| X | CN 102070831 A (DONGHUA UNIVERSITY) 25 May 2011 (2011-05-25) abstract, claims | 1, 2, 5, 6, 10, 11 |
| A | | 3, 4, 7-9 |
| X | CN 104987605 A (CGN-DELTA (SUZHOU) TOTAL POLYMER VISION CO., LTD.) 21 October 2015 (2015-10-21) claims | 1-7, 10, 11 |
| A | | 8, 9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 July 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/019162**

**C. DOCUMENTS CONSIDERED TO BE RELEVANT**

| Category* | Citation of document, with indication, where appropriate, of the relevant passages | Relevant to claim No. |
|---|---|---|
| X<br><br><br>A | CN 102181099 A (HEILONGJIANG ORIENT SCIENCE & TECHNOLOGY CO., LTD.) 14 September 2011 (2011-09-14)<br>abstract, claims, paragraphs [0005]-[0007] | 1-7, 10, 11<br><br><br>8, 9 |
| X<br><br><br><br>A | WO 2009/038237 A1 (SUMITOMO CHEMICAL COMPANY, LIMITED) 26 March 2009 (2009-03-26)<br>claims, p. 3, lines 13-21, p. 4, lines 7-9, p. 8, lines 29-32, p. 13, lines 4-8, p. 15, lines 17-27, p. 18, lines 26-29 | 1-7, 10, 11<br><br><br><br>8, 9 |
| A | CN 112538209 A (KINGFA SCIENCE AND TECHNOLOGY CO., LTD.) 23 March 2021 (2021-03-23)<br>paragraphs [0011], [0039], [0040], [0041], examples | 1-11 |

Form PCT/ISA/210 (second sheet) (July 2022)

**INTERNATIONAL SEARCH REPORT**
**Information on patent family members**

International application No.
**PCT/JP2024/019162**

| Patent document cited in search report | Publication date (day/month/year) | Patent family member(s) | Publication date (day/month/year) |
|---|---|---|---|
| CN 112280170 A | 29 January 2021 | (Family: none) | |
| CN 111393745 A | 10 July 2020 | (Family: none) | |
| CN 102070831 A | 25 May 2011 | (Family: none) | |
| CN 104987605 A | 21 October 2015 | (Family: none) | |
| CN 102181099 A | 14 September 2011 | (Family: none) | |
| WO 2009/038237 A1 | 26 March 2009 | US 2010/0233456 A1<br>claims, paragraphs [0019], [0023], [0054], [0080], [0091], [0092], [0110]<br>CN 101802087 A | |
| CN 112538209 A | 23 March 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001019825 A
- JP 61218606 A
- JP 5194685 A
- JP 7216017 A
- JP 9316147 A
- JP 10212319 A
- JP 2004182981 A
- JP 55075410 A
- JP 2565753 B


### Non-patent literature cited in the description


- Polymer Solution, Polymer Experiment 11. KYORITSU SHUPPAN CO., LTD, 1982, 491
- **KAKUGO et al.** *Macromolecules*, 1982, vol. 15, 1150-1152
- Polymer solution, Polymer Experiment 11. KYORITSU SHUPPAN CO., LTD., 1982, 491